# EUROPÄISCHE PATENTSCHRIFT

(11) **EP 2 632 686 B1**
(45) Veröffentlichungstag und Bekanntmachung des Hinweises auf die Patenterteilung: **30.12.2015**
(21) Anmeldenummer: 11779097.2
(22) Anmeldetag: 24.10.2011
(51) Int. Cl.: B29C 47/68

(54) **VORRICHTUNG ZUM FILTRIEREN EINER KUNSTSTOFFSCHMELZE**
DEVICE FOR FILTERING A PLASTIC MELT
DISPOSITIF DE FILTRATION D'UNE MATIÈRE PLASTIQUE FONDUE

(30) Priorität: 25.10.2010 DE 202010014709 U
(43) Veröffentlichungstag der Anmeldung: 04.09.2013
(73) Patentinhaber: Maag Automatik GmbH, 63762 Großostheim (DE)
(72) Erfinder: POHL, Harald, 48477 Hörstel (DE)
(74) Vertreter: Spranger, Stephan
(86) Internationale Anmeldenummer: PCT/EP2011/005351
(87) Internationale Veröffentlichungsnummer: WO 2012/055528

(56) Entgegenhaltungen:
- EP-A1- 1 502 724
- EP-A2- 1 645 396
- DE-A1- 3 419 822
- DE-A1- 3 742 964
- DE-U1-202008 017 409

## Beschreibung

Die Erfindung betrifft eine Vorrichtung zum Filtrieren einer Kunststoffschmelze, insbesondere einer thermoplastischen Kunststoffschmelze. Die Vorrichtung weist gemäß dem Oberbegriff des Anspruchs 1 ein Gehäuse auf, welches zumindest einen Eintrittskanal und zumindest einen Austrittskanal für die Kunststoffschmelze aufweist, wobei der zumindest eine Eintrittskanal von dem zumindest einen Austrittskanal durch zumindest einen Filterhohlraum zur Aufnahme zumindest einen darin axial verschiebbaren Filterbolzens getrennt ist, wobei der zumindest eine Filterbolzen zumindest einen Filtergrundkörper mit einer Filterfläche mit dort durch den Filtergrundkörper durchtretenden Filteröffnungen aufweist, durch welche die Kunststoffschmelze zu einem Filtrathohlraum im Filtergrundkörper durchtritt, und wobei der Filtrathohlraum mit dem zumindest einen Austrittskanal in Fluidverbindung steht.

Eine Vorrichtung zum Filtrieren mit den Merkmalen gemäß dem Oberbegriff des Anspruchs 1 ist beispielsweise aus der Patentschrift DE 34 19 822 C2 bekannt, wobei bei dieser gattungsbildenden Vorrichtung die Filterfläche um den gesamten Umfang des Filterbolzens dort herum verlaufend ausgeführt ist und dabei ein Verteilergewebe und ein Siebgewebe vorgesehen sind, welche den Filterbolzen dort umhüllen und beispielsweise mittels eines zylindrischen Spannkörpers dort herum gehalten werden. Somit ist die dortige Filteranordnung verhältnismäßig aufwendig in der Konstruktion, und im Falle einer Wartung bzw. eines Austauschs des Verteilergewebes bzw. des Siebgewebes dort ist ein hoher manueller Aufwand und damit verbunden eine relativ lange Standzeit der Gesamtvorrichtung unvermeidbar.

Die europäische Patentanmeldung EP 1 502 724 A1 beschreibt eine Siebvorrichtung, bei welcher auf einem Stützkörper des dortigen Siebstempels ein handelsübliches Siebband mit Spannelementen festgelegt wird, so dass durch Lösen der Spannelemente das Siebband leicht auswechselbar auf dem Stützkörper montierbar ist.

Der vorliegenden Erfindung liegt somit die Aufgabe zugrunde, eine Vorrichtung zum Filtrieren einer Kunststoffschmelze vorzusehen, welche die Nachteile des Standes der Technik überwindet, und insbesondere eine Vorrichtung zum Filtrieren einer Kunststoffschmelze vorzusehen, bei welcher auf konstruktiv einfache Weise eine im Betrieb zuverlässige und dabei leicht und schnell wechselbare Filtersiebanordnung gewährleistet ist.

Diese Aufgabe wird erfindungsgemäß durch eine Vorrichtung mit den Merkmalen des Anspruchs 1 gelöst. Bevorzugte Ausführungsformen der Erfindung sind in den Unteransprüchen definiert.

Die erfindungsgemäße Vorrichtung zum Filtrieren einer Kunststoffschmelze, insbesondere einer thermoplastischen Kunststoffschmelze, weist ein Gehäuse auf, welches mit zumindest einem Eintrittskanal und zumindest einem Austrittskanal für die zu filtrierende Kunststoffschmelze versehen ist. Der zumindest eine Eintrittskanal ist von dem zumindest einen Austrittskanal durch zumindest einen Filterhohlraum abgetrennt, bevorzugt durch mindestens einen senkrecht zu diesen Kanälen verlaufenden, besonders bevorzugt zylindrischen Filterhohlraum, wobei innerhalb des zumindest einen Filterhohlraums ein dort axial verschiebbarer Filterbolzen angeordnet ist, so dass dadurch der zumindest eine Eintrittskanal von dem zumindest einen Austrittskanal getrennt ist. Der Filterbolzen ist dabei bevorzugt derart präzise innerhalb des bevorzugt zylindrischen Filterhohlraums jeweils angeordnet, dass ohne zusätzliche Dichtmittel auch bei einer axialen Verschiebung des Filterbolzens verhindert wird, dass sich zwischen der entsprechenden Außenwandung des Bolzens und der entsprechenden Innenwandung des zylindrischen Filterhohlraums in unerwünschter Weise Kunststoffschmelze durchdrücken kann. Der bevorzugt zylindrische Filterbolzen weist zumindest einen Filtergrundkörper mit einer Filterfläche mit dort durch den Filtergrundkörper durchtretenden Filteröffnungen auf, durch welche die zu filtrierende Kunststoffschmelze zu einem Filtrathohlraum im Filtergrundkörper durchtritt, wobei der Filtrathohlraum mit dem zumindest einen Austrittskanal in Fluidverbindung steht. Die zu filtrierende Kunststoffschmelze tritt somit vom äußeren Bereich des Filtergrundkörpers zum Filtrathohlraum im Filtergrundkörper nach innen :durch, wobei die zu filtrierende Kunststoffschmelze über den Eintrittskanal im Filterhohlraum des Gehäuses 1 entsprechend zugeführt wird und über den Filtrathohlraum und den damit in Fluidverbindung stehenden Austrittskanal im Gehäuse von dort abgeführt wird. Im Unterschied zu der zuvor beschriebenen gattungsbildenden bekannten Vorrichtung ist bei der erfindungsgemäßeri Vorrichtung die Filterfläche des Filtergrundkörpers von einem flexibel-elastischen Filtersieb umfasst, so dass dieses Filtersieb dort auf den Filtergrundkörper aufklemmbar ist, d. h. das Filtersieb selbst ist so stabil und gleichzeitig flexibel und elastisch ausgebildet, dass es von selbst klemmend den Filtergrundkörper zumindest im Bereich der Filterfläche umschließt.

Erfindungsgemäß kann also die Konstruktion und Handhabung eines Filterelementes mit entsprechendem Filtersieb vereinfacht werden, indem das Filtersieb stabil und flexibel elastisch ausgeführt wird und somit ein solches Filtersieb erfindungsgemäß die Filterfläche umfasst und dort auf den Filtergrundkörper aufklemmbar ist, ohne dass zusätzliche Befestigungselemente vonnöten sind. Außerdem kann die flexibel-elastische Gestaltung des Filtersiebs dabei bevorzugt auch so stabil sein, beispielsweise aus Metallmaterial bestehend, dass es bei Befestigung eines solchen Filtersiebs erfindungsgemäß nicht zu Verwerfungen oder Faltenbildungen des Siebmaterials kommen kann, wie dies bei den mit separaten Befestigungselementen zu befestigenden mattenartigen Siebmaterialien gemäß dem Stand der Technik ungünstigerweise der Fall sein kann. Erfindungsgemäß wird somit der Betrieb einer solchen. Filtervorrichtung besonders zuverlässig, und im Fall einer Wartung kann ein Filtersiebaustausch besonders einfach und rasch erfolgen.

Um mögliche Toträume im Bereich der erfindungsgemäßen Filtervorrichtung weitestgehend verhindern zu können, so dass der Betrieb einer solchen Filtervorrichtung besonders zuverlässig ist, und um die Klemmwirkung des flexibel-elastischen Filtersiebs im Bereich der Filterfläche auf dem Filtergrundkörper besonders sicherzustellen, kann gemäß einer bevorzugten Ausführungsform der Erfindung die Kontur des aufklemmbaren Filtersiebs der Kontur der Filterfläche im Querschnitt gesehen folgen.

Eine besonders sichere Klemmung und eine optimale Raumausnutzung ist vorteilhafterweise erfindungsgemäß dann gegeben, wenn das auf die Filterfläche dort aufklemmbare Filtersieb im Querschnitt bogenförmig ausgebildet ist, wobei das Filtersieb dabei dann besonders bevorzugt auch der entsprechend bogenförmig ausgebildeten Kontur der Filterfläche bzw. des Filtergrundkörpers dort folgt.

Die Klemmwirkung ist erfindungsgemäß besonders bevorzugt dann gegeben, wenn das auf die Filterfläche dort aufklemmbare Filtersieb im Querschnitt gesehen einen Winkel von mindestens 180° und maximal 270° des dortigen Umfangs des Filterbolzens umfasst, bevorzugter etwa 240° des dortigen Umfangs umfasst, und dabei den entsprechenden Umfangsanteil der Filterfläche überdeckt. Somit ist aufgrund der solchermaßen nicht vollständigen Umschlingung auch sichergestellt, dass das erfindungsgemäße Filtersieb relativ einfach wieder von der Filterfläche abnehmbar ist.

Gemäß einer vorteilhaften Ausführungsform der erfindungsgemäßen Vorrichtung kann der Filterbolzen zumindest im Bereich des Filtergrundkörpers und in dem Bereich davon, in welchem die Fluidverbindung mit dem zwischen dem. Filtrathohlraum und dem Austrittskanal besteht, einen Filterbasisteil aufweisen, welcher im Querschnitt in seiner Außenkontur der dortigen Innenkontur des Filterhohlraums im Gehäuse entspricht und dort keine Filterfläche aufweist. Somit kann das Totraumvolumen weiter verringert sein, und außerdem kann somit die axiale Führung des Filterbolzens im Filterhohlraum des Gehäuses verbessert sein, so dass auch dadurch keine zu filtrierende Kunststoffschmelze zwischen dem Filterbolzen dort und dem Gehäuse durchtreten kann.

Die Ausrichtung und Fixierung des Filtersiebs kann beispielsweise so gelöst sein, dass das Filtersieb mit axialen Abschlusskanten dort beidseitig jeweils in einer axialen Nut in dem eben beschriebenen Filterbasisteil gehalten ist. Dies ergibt neben der eigentlichen Klemmung eine besonders zuverlässige Führung des erfindungsgemäßen Filtersiebs.

Gemäß einer anderen bevorzugten Ausführungsform der Erfindung kann es auch möglich sein, dass im Bereich des Filtergrundkörpers zumindest zwei Fixierstifte vorgesehen sind, so dass dort das Filtersieb mit entsprechenden Öffnungen darin aufsetzbar und so gehalten ist, wodurch sich die entsprechend im vorherigen Absatz beschriebenen Vorteile der zusätzlichen Führung auch dabei ergeben. Bei dieser Ausführungsform ergibt sich darüber hinaus der weitere Vorteil, dass keine Nuten vorgesehen sein müssen, welche sich beispielsweise mit der Kunststoffschmelze leichter zusetzen können.

Zur Vereinfachung der Handhabung beim Auf- und Abnehmen des erfindungsgemäßen Filtersiebs kann dieses Filtersieb zumindest im Bereich seiner axialen Abschlusskante jeweils eine oder mehrere Hantierösen aufweisen, so dass dort ein Hantierwerkzeug zum Aufspreizen des Filtersiebs ansetzbar ist. Somit kann der Vorgang des Auswechselns des Filtersiebs besonders rasch und einfach ausgeführt werden.

Wie bereits vorher beschrieben, ist die Form des Filterhohlraums bzw. des Filterbolzens darin bevorzugt zylindrisch. Dabei kann gemäß einer bevorzugten Ausführungsform der Erfindung im Querschnitt der Filterhohlraum kreisförmig ausgebildet sein und der Filtergrundkörper im Querschnitt die Form von zumindest einem oder mehreren Kreissegmentabschnitt(en) mit unterschiedlichem Durchmesser aufweisen. Solche Formgebungen sind konstruktiv besonders einfach herstellbar und für den durchtretenden Schmelzestrom besonders strömungsgünstig, so dass der Betrieb einer so erfindungsgemäß gestalteten Vorrichtung besonders zuverlässig möglich sein kann.

Der Filterbolzen kann zweckmäßigerweise axial zwischen einer Filtrierposition und einer Nicht-Filtrierposition verschiebbar sein. Die Verschiebung kann dabei zweckmäßig durch eine (jeweilige) Hydraulikvorrichtung erfolgen.

Besonders bevorzugt ist es, wenn gemäß einer bevorzugten Ausführungsform der Filterbolzen neben dem Filtergrundkörper noch einen Bolzenabschnitt aufweist, welcher im Querschnitt den Querschnitt des Filterhohlraums in dem Gehäuse entspricht, so dass er diesen Filterhohlraum in der Nicht-Filtrierposition ausfüllt. Somit kann beispielsweise im Fall eines Auswechselns des erfindungsgemäßen Filtersiebs die Zuführung und Abführung von zu filtrierendem Kunststoffmaterial allein dadurch auf konstruktiv einfache Weise unterbrochen werden.

Es sei angemerkt, dass der in der vorliegenden Beschreibung verwendete Begriff Kunststoffschmelze insbesondere eine Polypropylen-, Polyethylen-, Hochdruckpolypropylen-, Niederdruckpolyethylen-, lineares Niederdruckpolyethylen-, Polystyrol-, Polyamid-, Alkyl-Butadien-Styrol-(ABS)-, Polyester, Polyoxymethylen-(POM)-, Polyacrylate-, Polymethylmetacrylate-(PMMA)- und Polyvinylchlorid-Schmelze bezeichnen kann. Ferner ist festzustellen, dass die zylinderförmig bzw. kreisförmig bezeichneten Elemente der erfindungsgemäßen Vorrichtung auch polygonale Formen entsprechend aufweisen können.

Die erfindungsgemäße Vorrichtung wird nachfolgend anhand der Zeichnung beispielhaft näher erläutert werden. Es zeigen:
Fig. 1 eine schematische Darstellung einer erfindungsgemäßen Vorrichtung zum Filtrieren einer thermoplastischen Kunststoffschmelze; und
Fig. 2 eine Teilansicht im Schnitt der Linie A-A in Fig. 1.

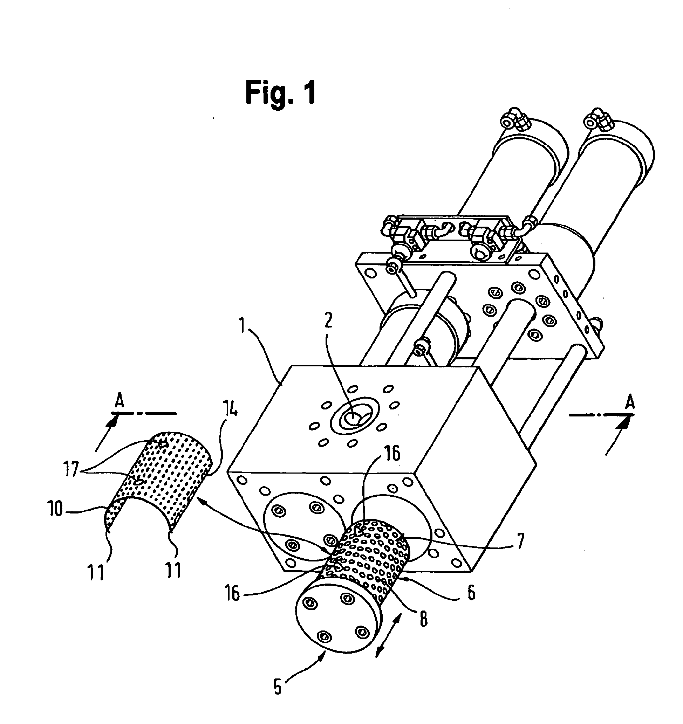

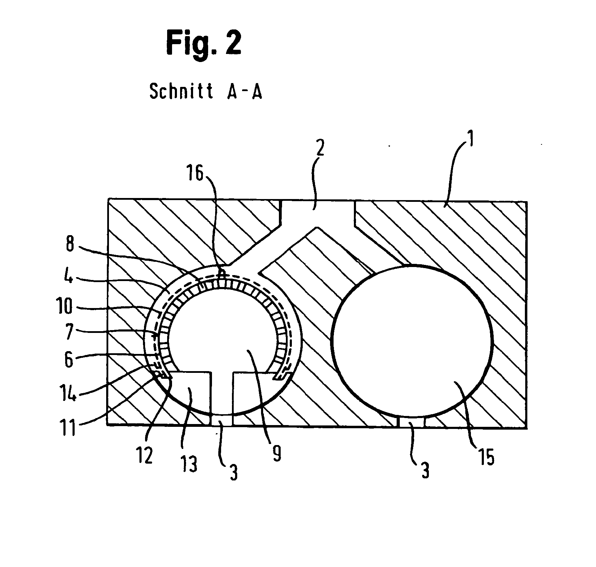

In Fig. 1 ist schematisch eine Vorrichtung zum Filtrieren einer Kunststoffschmelze gemäß der Erfindung abgebildet. Die Vorrichtung weist ein Gehäuse 1 auf, wobei das Gehäuse 1 mit zwei zylindrischen Filterhohlräumen 4 versehen ist, wobei die Filterhohlräume 4 jeweils mit einem darin axial verschiebbaren Filterbolzen 5 versehen sind. Die axiale Verschiebbarkeit ist durch den entsprechenden Doppelpfeil rechts unten in Fig. 1 angegeben. Um die axiale Verschiebung der Filterbolzen 5 zu bewirken, sind den Bolzen jeweils Hydraulikelemente zugeordnet. Die Filterbolzen 5 sind nebeneinander angeordnet und identisch ausgebildet. Dabei ist der linke Filterbolzen 5 in einer Filtrierposition gezeigt und der rechte Filterbolzen 5 in einer Nicht-Filtrierposition gezeigt. In Strömungsrichtung der zu filtrierenden Kunststoffschmelze gesehen gelangt diese über einen Eintrittskanal 2 in das Gehäuse 1, von dort über den sich Y-förmig aufteilenden Eintrittskanal 2 jeweils in einen der Filterhohlräume 4 in dem Gehäuse 1, wird dort durch den jeweiligen Filtergrundkörper 6 mit einer Filterfläche 7 dort durch die Filteröffnungen 8 geführt, durch welche die Kunststoffschmelze zu einem Filtrathohlraum 9 im Filtergrundkörper 6 durchtritt, und gelangt dann vom Filtrathohlraum 9 zu dem zumindest einen, damit in Fluidverbindung stehenden Austrittskanal 3 und somit wieder aus dem Gehäuse 1. Die genaue Lage der Elemente und Kanäle bzw. Hohlräume ist dabei teilweise in Fig. 1 nicht vollständig zu sehen, wird allerdings.im Zusammenhang mit Fig. 2 genauer gezeigt.

Wie in der Darstellung der Fig. 1 zu sehen, wird die Filterfläche 7 des Filtergrundkörpers 6 jeweils von einem entfernbaren, flexiblen, elastischen und dabei dennoch in sich stabilen, d.h. nicht mattenartig ausgebildeten, Filtersieb 10 umfasst, so dass dieses Filtersieb 10 dort auf den Filtergrundkörper 6 aufklemmbar ist. Das Filtersieb 10 kann dabei mit seinen axialen Abschlusskanten 11 jeweils in einer axialen Nut 12 in einem Filterbasisteil 13 gehalten sein. Gemäß der Darstellung sind im oberen Bereich des Filtergrundkörpers 6 noch zumindest zwei Fixierstifte 16 vorgesehen, so dass dort das Filtersieb 10 mit entsprechenden Öffnungen 17 aufsetzbar ist und so gehalten ist. Das Filtersieb 10 weist im Bereich seiner axialen Abschlusskanten jeweils Hantierösen 14 auf, so dass dort ein Hantierwerkzeug zum Aufspreizen des Filtersiebs 10 ansetzbar ist. Die Kontur des aufklemmbaren Filtersiebs 10 folgt der Kontur der Filterfläche 7. Dabei ist gemäß der Darstellung das auf die Filterfläche 7 dort aufklemmbare Filtersieb im Querschnitt bogenförmig ausgebildet und umfasst etwa 240° des dortigen Umfangs des Filterbolzens 5, wobei das Filtersieb 10 dabei den entsprechenden Umfangsanteil der Filterfläche 7 überdeckt.

Wie bereits angedeutet, befindet sich bei der in Fig. 1 und Fig. 2 gezeigten erfindungsgemäßen Vorrichtung der linke Filterbolzen 5 in einer Filtrierposition (Arbeitsstellung), während der rechte Filterbolzen 5 in der Nicht-Filtrierposition abgebildet ist, in welcher die Filterfläche 7 des Filtergrundkörpers 6 dort frei von außen zugänglich ist, so dass dort in dieser Position ein Austausch des beispielsweise mit Schmutzpartikeln beladenen Filtersiebs 10 entsprechend dem dortigen Doppelpfeil in Fig. 1 gegen ein unbeladenes Filtersieb 10 erfolgen kann.

Die zylindrischen Filterbolzen 5 sind so auf die Durchmesser der jeweiligen Filterhohlräume 4 im Gehäuse 1 angepasst, dass selbst bei einer axialen Verschiebung der Filterbolzen 5 in der entsprechenden Pfeilrichtung der Fig. 1 keine Leckage auftritt und somit hier weder in der Filtrierposition noch in der Nicht-Filtrierposition Kunststoffschmelze unerwünscht austreten kann. Dazu weist der Filterbolzen 5 jeweils neben dem Filtergrundkörper 6 und dem Filterbasisteil .13 noch einen Bolzenabschnitt 15 auf, welcher im Querschnitt dem Querschnitt des Filterhohlraums 4 in dem Gehäuse 1 entspricht. Der Filterhohlraum 4 ist somit in der Nicht-Filtrierposition entsprechend ausgefüllt.

Die Fig. 2 zeigt die Ausführungsform der erfindungsgemäßen Vorrichtung entlang des Schnitts der Linie A-A der Fig. 1. Wie in Fig. 2 besonders gut zu erkennen ist, teilt sich der Eintrittskanal 2 im Gehäuse 1 Y-förmig auf zwei Teilkanäle auf, wodurch jeweils ein Teilstrom der zu filtrierenden Kunststoffschmelze jeweils zum linken Filterhohlraum 4 bzw. dem dort sich befindlichen Filterbolzen 5 in der Filtrierposition zugeführt wird bzw. dem rechten Filterhohlraum 4 mit dem dort sich in der Nicht-Filtrierposition befindenden Filterbolzen 5 zugeführt wird. Rechts in Fig. 2 ist besonders gut zu sehen, dass der Filterbolzen 5 noch den Bolzenabschnitt 15 aufwiest, welcher im Querschnitt dem Querschnitt des Filterhohlraums 4 in dem Gehäuse 1 entspricht, so dass er diesen rechten Filterhohlraum 4 in der Nicht-Filtrierposition ausfüllt. Jeder Filterhohlraum 4 weist gemäß der Darstellung einen separaten Austrittskanal 3 auf, wobei es auch denkbar wäre, dass die jeweiligen Austrittskanäle 3 noch im Gehäuse 1 wieder zusammengeführt werden und in einer gemeinsamen Austrittsöffnung aus dem Gehäuse 1 austreten (was allerdings nicht gezeigt ist).

Im Querschnitt der Fig. 2 links gut zu sehen ist neben dem Filtergrundkörper 6 der Filterbasisteil 13, welcher im Querschnitt in seiner Außenkontur der dortigen Innenkontur des Filterhohlraums 4 des Gehäuses 1 entspricht und dort keine Filterfläche 7 aufweist. Der Filtergrundkörper 6 weist die Filterfläche 7 auf, durch welche die Kunststoffschmelze über Filteröffnungen 8 zum Filtrathohlraum 9 im Filtergrundkörper 6 durchtritt, wobei der Filtrathohlraum 9 mit dem Austrittskanal 3 in der links in Fig. 2 zu sehenden Filtrierposition in Fluidverbindung steht. Die Filterfläche 7 des Filtergrundkörpers 6 ist von dem flexibel-elastischen Filtersieb 10 erfindungsgemäß so umfasst, dass dieses Filtersieb 10 dort entfernbar auf dem Filtergrundkörper 6 aufklemmbar ist. Das Filtersieb 10 ist, wie links in Fig. 2 zu sehen, mit axialen Abschlusskanten 11 dort beiderseits jeweils in einer axialen Nut 12 im Filterbasisteil 13 axial geführt.

Mit der erfindungsgemäßen Vorrichtung kann auf einfache Weise konstruktiv ohne hohen baulichen Aufwand ein im Betrieb zuverlässiges und dabei dennoch einfach und schnell zu wechselndes Filtersieb erfindungsgemäß verwirklicht sein.

## Patentansprüche

1. Vorrichtung zum Filtrieren einer Kunststoffschmelze, mit einem Gehäuse (1), welches zumindest einen Eintrittskanal (2) und zumindest einen Austrittskanal (3) für die Kunststoffschmelze aufweist, wobei der zumindest eine Eintrittskanal (2) von dem zumindest einen Austrittskanal (3) durch zumindest einen Filterhohlraum (4) zur Aufnahme zumindest einen darin axial verschiebbaren Filterbolzens (5) getrennt ist, wobei der zumindest eine Filterbolzen (5) zumindest einen Filtergrundkörper (6) mit einer Filterfläche (7) mit dort durch den Filtergrundkörper (6) durchtretenden Filteröffnungen (8) aufweist, durch welche die Kunststoffschmelze zu einem Filtrathohlraum (9) im Filtergrundkörper (6) durchtritt, wobei der Filtrathohlraum (9) mit dem zumindest einen Austrittskanal (3) in Fluidverbindung steht, **dadurch gekennzeichnet, dass**
die Filterfläche (7) des Filtergrundkörpers (6) von einem flexibel, elastischen Filtersieb (10) umfasst ist, so dass dieses Filtersieb (10) dort auf den Filtergrundkörper (6) aufklemmbar ist.

2. Vorrichtung nach Anspruch 1, **dadurch gekennzeichnet, dass** die Kontur des aufklemmbaren Filtersiebs (10) der Kontur der Filterfläche (7) folgt.

3. Vorrichtung nach Anspruch 1 oder 2, **dadurch gekennzeichnet, dass** das auf die Filterfläche (7) dort aufklemmbare Filtersieb (10) im Querschnitt bogenförmig ausgebildet ist.

4. Vorrichtung nach einem der Ansprüche 1 bis 3, **dadurch gekennzeichnet, dass** das auf die Filterfläche (7) dort aufklemmbare Filtersieb (10) im Querschnitt einen Winkel von mindestens 180° und maximal 270° des dortigen Umfangs des Filterbolzens (5) umfasst, bevorzugt etwa 240° des dortigen Umfangs umfasst, und dabei den entsprechenden Umfangsanteil der Filterfläche (7) überdeckt.

5. Vorrichtung nach einem der Ansprüche 1 bis 4, **dadurch gekennzeichnet, dass** der Filterbolzen (5) zumindest im Bereich des Filtergrundkörpers (6) und in dem Bereich davon, in welchem die Fluidverbindung von Filtrathohlraum (9) und Austrittskanal (3) besteht, einen Filterbasisteil (13) aufweist, welcher im Querschnitt in seiner Außenkontur der dortigen Innenkontur des Filterhohlraums (4) im Gehäuse (1) entspricht, und dort keine Filterfläche (7) aufweist.

6. Vorrichtung nach Anspruch 5, **dadurch gekennzeichnet, dass** das Filtersieb (10) mit axialen Abschlusskanten (11) dort beiderseits jeweils in einer axialen Nut (12) im Filterbasisteil (13) gehalten ist.

7. Vorrichtung nach einem der Ansprüche 1 bis 6, **dadurch gekennzeichnet, dass** im Bereich des Filtergrundkörpers (6) zumindest zwei Fixierstifte (16) vorgesehen sind, so dass dort das Filtersieb (10) mit entsprechenden Öffnungen (17) aufsetzbar und so gehalten ist.

8. Vorrichtung nach einem der Ansprüche 1 bis 7, **dadurch gekennzeichnet, dass** das Filtersieb (10) zumindest im Bereich seiner axialen Abschlusskanten (11) jeweils eine oder mehrere Hantierösen (14) aufweist, so dass dort ein Hantierwerkzeug zum Aufspreizen des Filtersiebs (10) ansetzbar ist.

9. Vorrichtung nach einem der Ansprüche 1 bis 8, **dadurch gekennzeichnet, dass** im Querschnitt der Filterhohlraum (4) kreisförmig ist und der Filtergrundkörper (6) im Querschnitt die Form von zumindest einem oder mehreren Kreissegmentabschnitt(en) mit unterschiedlichem Durchmesser aufweist.

10. Vorrichtung nach einem der Ansprüche 1 bis 9, **dadurch gekennzeichnet, dass** der Filterbolzen (5) axial zwischen einer Filtrierposition und einer Nicht-Filtrierposition verschiebbar ist.

11. Vorrichtung nach einem der Ansprüche 1 bis 10, **dadurch gekennzeichnet, dass** der Filterbolzen (5) neben dem Filtergrundkörper (6) noch einen Bolzenabschnitt (15) aufweist, welcher im Querschnitt dem Querschnitt des Filterhohlraums (4) in dem Gehäuse (1) entspricht, so dass er diesen Filterhohlraum (4) in der Nicht-Filtrierposition ausfüllt.

## Claims

1. A device for filtering a plastic melt, having a housing (1), which has at least one inlet conduit (2) and at least one outlet conduit (3) for the plastic melt; the at least one inlet conduit (2) is separated from the at least one outlet conduit (3) by at least one filter cavity (4) for accommodating at least one filter bolt (5) in an axially sliding fashion; the at least one filter bolt (5) has at least one filter base body (6) with a filter surface (7) that has filter openings (8) passing through the filter base body (6), through which the plastic melt passes on its way to a filter cavity (9) in the filter base body (6); and the filter cavity (9) is fluidically connected to the at least one outlet conduit (3),
**characterized in that**
the filter surface (7) of the filter base body (6) is encompassed by a flexible, elastic filter screen (10) so that this filter screen (10) can be clamped to the filter base body (6) there.

2. The device according to claim 1, **characterized in that** the contour of the clampable filter screen (10) follows the contour of the filter surface (7).

3. The device according to claim 1 or 2, **characterized in that** the filter screen (10) that can be clamped to the filter surface (7) is arc-shaped in cross-section.

4. The device according to one of claims 1 through 3, **characterized in that** the filter screen (10) that can be clamped to the filter surface (7) encloses a cross-sectional angle of at least 180° and at most 270° of the circumference of the filter bolt (5) there - preferably approximately 240° of the circumference there - and as a result, covers the corresponding portion of the circumference of the filter surface (7).

5. The device according to one of claims 1 through 4, **characterized in that** the filter bolt (7), at least in the region of the filter base body (6) and in the region of the latter in which the fluidic cpnnection of the filter cavity (9) and the outlet conduit (3) is produced, has a filter base part (13) that cross-sectionally corresponds in its outer contour to the inner contour there of the filter cavity (4) in the housing (1) and in this region, has no filter surface (7).

6. The device according to claim 5, **characterized in that** the filter screen (10) is secured with its axial terminal edges (11) on both sides, each in a respective axial groove (12) in the filter base part (13).

7. The device according to one of claims 1 through 6, **characterized in that** in the region of the filter base body (6), at least two fixing pins (16) are provided so that the filter screen (10) can be placed onto them with corresponding openings (17) and is thus held in position.

8. The device according to one of claims 1 through 7, **characterized in that** the filter screen (10) - at least in the region of its axial terminal edges (11) - has one or more respective manipulating openings (14) so that a manipulating tool can be positioned there in order to spread open the filter screen (10).

9. The device according to one of claims 1 through 8, **characterized in that** the filter cavity (4) is circular in cross-section and the filter base body (6) is cross-sectionally embodied in the form of at least one or more segment(s) of a circle with different diameters.

10. The device according to one of claims 1 through 9, **characterized in that** the filter bolt (5) can be slid axially between a filtering position and a non-filtering position.

11. The device according to one of claims 1 through 10, **characterized in that** in addition to the filter base body (6), the filter bolt (5) also has a bolt section (15) whose cross-section corresponds to the cross-section of the filter cavity (4) in the housing (1) so that it fills this filter cavity (4) in the non-filtering position.

## Revendications

1. Dispositif pour filtrer une masse fondue de matière plastique avec un boîtier (1) comportant au moins un canal d'entrée (2) et au moins un canal de sortie (3) pour la masse fondue, le au moins un canal d'entrée (2) étant séparé du au moins un canal de sortie (3) par au moins un espace vide de filtre (4) recevant au moins un axe de filtration (5) axialement mobile, le au moins un axe de filtration (5) présentant au moins un corps de filtre (6) avec une surface de filtration (7) dotée d' ouvertures de filtration (8) à travers le corps de filtre (6) qui sont traversées par la masse fondue parvenant à une cavité pour filtrat (9) dans le corps de filtre (6), la cavité pour filtrat (9) étant en communication fluide avec le au moins canal de sortie (3)
**caractérisé en ce que**
la surface de filtration (7) du corps de filtre (6) est enserrée par un tamis de filtration flexible, élastique (10), de sorte que ce tamis (10) peut être clipsé sur le corps de filtre (6).

2. Dispositif selon la revendication 1. **caractérisé en ce que**, les contours du tamis de filtration (10) pouvant être clipsé suivent les contours de la surface de filtration (7).

3. Dispositif selon la revendication 1. ou 2. **caractérisé en ce que** le tamis de filtration (10) pouvant être clipsé sur la surface de filtration (7) présente une forme arquée en coupe.

4. Dispositif selon la revendication 1. ou 3. **caractérisé en ce que** le tamis de filtration (10) pouvant être clipsé sur la surface de filtration (7) comprend en coupe un angle d'au moins 180° et au maximum de 270° de la circonférence à cet endroit de l'axe de filtration (5), de préférence comprend environ 240° de la circonférence à cet endroit en recouvrant la portion de circonférence correspondant à la surface de filtration (7).

5. Dispositif selon la revendication 1. à 4. **caractérisé en ce que** l'axe de filtration (5) au moins dans la zone du corps de filtre (6) et dans la zone de laquelle se trouve la communication fluide entre la cavité pour filtrat (9) et le canal de sortie (3), comporte une base de filtre (13) qui en coupe présente des contours externes correspondant aux contours internes à cet endroit de l'espace vide du filtre (4) dans le boitier (1) et ne comporte pas de surface de filtration (7) à cet endroit.

6. Dispositif selon la revendication 5. **caractérisé en ce que** le tamis de filtration (10) est maintenu dans une rainure axiale (12) dans la base du filtre (13) par ses bords axiaux (11) sur ses deux côtés.

7. Dispositif selon la revendication 1. à 6. **caractérisé en ce que** dans la zone du corps de filtre (6) au moins deux broches de fixation (16) sont prévues pour recevoir et maintenir le tamis de filtration (10) présentant des ouvertures correspondantes (17).

8. Dispositif selon la revendication 1. à 7. **caractérisé en ce que** le tamis de filtration (10) au moins dans la zone de ses bords axiaux (11) compte respectivement un ou plusieurs oeillets (14) de manipulation de sorte qu'un outil de manipulation peut y être fixé pour écarter le tamis (10).

9. Dispositif selon la revendication 1. à 8. **caractérisé en ce qu'**en coupe l'espace vide du filtre (4) est rond et le corps de filtre (6) en coupe a la forme d'au moins un ou de plusieurs secteurs de cercle de différents diamètres.

10. Dispositif selon la revendication 1. à 9. **caractérisé en ce que** l'axe de filtration (5) peut être déplacé entre une position de filtration et une position de non-filtration.

11. Dispositif selon la revendication 1. à 10. **caractérisé en ce que** l'axe de filtration (5) comporte outre le corps de filtre (6) une portion d'axe (15) dont la forme en coupe correspond à la forme en coupe de la cavité du filtre (4) dans le boîtier (1) de sorte qu'il remplit cette cavité de filtre (4) dans la position de non-filtration.
